# EUROPEAN PATENT SPECIFICATION

(11) **EP 3 695 995 B1**
(45) Date of publication and mention of the grant of the patent: **29.12.2021**
(21) Application number: 19200043.8
(22) Date of filing: 27.09.2019
(51) Int. Cl.: B60G 17/056, F16K 35/16, B60T 13/26, B60T 15/04, B60T 17/04, B60G 17/052, F16K 11/07, F16K 11/16, F16K 11/22, F16K 3/22, F16K 31/524, F16K 31/60, F16K 35/04, F16K 3/24

(54) **PNEUMATIC CONTROL UNIT**
PNEUMATISCHE STEUEREINHEIT
UNITÉ DE COMMANDE PNEUMATIQUE

(30) Priority: 15.02.2019 EP 19157348; 15.02.2019 EP 19157360
(43) Date of publication of application: 19.08.2020
(73) Proprietor: KNORR-BREMSE Systeme für Nutzfahrzeuge GmbH, 80809 München (DE)
(72) Inventor: FARKAS, Gabor, 6000 Kecskemét (HU)

(56) References cited:
- DE-A1-102008 031 704
- DE-A1-102016 008 215
- DE-A1-102017 112 104
- DE-B3-102007 053 766
- GB-A- 964 104

## Description

The present invention relates to a pneumatic control unit, a component of a pneumatic vehicle brake and air suspension system and such a system.

Pneumatic systems especially installed on trailer vehicles are used for realizing several functions of the trailer. One function is the raising and lowering of the vehicle body of the trailer to adjust its height with respect to, for example, a loading bay. These systems can be controlled by manually operated actuators. To avoid that an operator has to hold the actuator in a position causing e.g. raising of the trailer, there is a need for an actuator which can be locked in at least one position.

In some situations e.g. when the trailer is moved away from the loading bay, the pneumatic system has to execute a reset so that the height of the trailer is adjusted to a predetermined height level. If the system comprises actuators for the raising and lowering operation which can be locked or which remain in an operating position, the reset of these actuators has to be done manually. Thus, there is a need for self-resetting actuators.

GB 964 104 A shows a brake valve device comprising an electromagnetically controllable choke.

DE 10 2016 008 215 A1 shows a park-release-valve.

DE 10 2017 112 104 A1 shows a slider-based pneumatic valve comprising a locking device.

DE 10 2008 031 704 A1 shows a valve comprising a rotary actuator and a locking mechanism, wherein locking elements are comprised which can be moved by an electromagnet into a position wherein they engage with a yoke aperture to lock the rotary actuator.

DE 10 2007 053 766 B3 shows a control device for a trailer comprising service brake, parking brake and air suspension.

It is an object of the present invention to provide a possibility for locking an actuator of a system as described above.

This object is solved by the subject matters of the independent patent claims. Advantageous embodiments are given by the subject matters of the dependent claims.

According to the invention, a pneumatic control unit is provided for controlling a pneumatic pressure comprising:
- a housing,
- at least one actuator configured to be manually moved along a total distance within the housing and configured to control a pneumatic pressure depending on its position on the total distance, and
- a locking mechanism configured to lock the at least one actuator in at least one locking position along the total distance.

The housing is preferably comprising at least one output port preferably configured to supply the pneumatic pressure controlled by the at least one actuator to other devices which are connected to the at least one output port.

The pneumatic control unit is preferably comprising at least one supply port configured to receive a pneumatic pressure.

The pneumatic control unit is preferably comprising an exhaust port configured to exhaust the output port which is configured to supply the pneumatic pressure.

Preferably, the pneumatic control unit is configured that controlling operation of the pneumatic pressure comprises supplying the pneumatic pressure from the supply port to the output port in at least one position of the actuator along the total distance and connecting the output port to the exhaust port in order to exhaust the output port in at least another position of the actuator along the total distance.

The locking mechanism allows an operator to move the actuator into the locking position, wherein the actuator is preferably configured to supply the pneumatic pressure to the output port of the pneumatic control unit.

The at least one locking position is preferably an end position on the total distance.

The locking mechanism is configured to release the locking of the at least one actuator if at least one release condition is met.

The locking mechanism is configured to lock the at least one actuator by applying a magnetic locking force. The magnetic locking force is applied on the at least one actuator. Preferably, when the at least one actuator is moved to the at least one locking position, the magnetic locking force is configured to lock the actuator in this position. Further preferably, when the at least one actuator is moved near the at least one locking position, the magnetic force is configured to move the at least one actuator into the locking position. This configuration has the advantage that especially manual operation of the at least one actuator becomes safer. Due to the magnetic attraction, the risk of stopping in an incorrect position of the at least one actuator along the entire distance is reduced. Preferably, the magnetic attraction force near the locking position is strong enough to move the at least one actuator into the locking position from a distance of 10% or less of the total distance, especially preferred 20% or less of the total distance, in particular 30% or less of the total distance.

Preferably, the magnitude of the magnetic attraction force in the locking position determines the predetermined release value.

Preferably, the locking mechanism is further comprising a locking element and a locking counterpart which are configured to generate the magnetic locking force, if the actuator is moved into the at least one locking position.

The locking element and/or the locking counterpart are/is preferably comprising a magnet and/or a magnetic material. Additionally or alternatively the locking element and/or the locking counterpart are/is provided on the at least one actuator and/or in the housing.

Preferably, the pneumatic control unit is further comprising a reset mechanism configured to reset the at least one actuator into a position along the total distance if at least one predetermined reset condition is met. Therefore, the at least one actuator can be reset by the reset mechanism.

The predetermined reset condition is preferably the appearance of a pneumatic confirmation pressure and/or of an electric or electronic confirmation signal and/or a mechanical confirmation signal.

Preferably, the reset mechanism is comprising a reset element configured to transmit a reset force or a reset torque to the at least one actuator, wherein the reset force or the reset torque is further preferably configured to move the at least one actuator into a position, preferably into an end position. The reset force or the reset torque is preferably transmitted from the reset element to the at least one actuator wherein the reset element gets into contact with the at least one actuator.

An electric or electronic confirmation signal can be generated by a control unit.

The pneumatic confirmation pressure is preferably configured to unlock a reset element or to generate a force which is applied to the reset element. The pneumatic confirmation pressure is preferably supplied to the pneumatic control unit via a reset port.

Preferably, the reset element is configured to transmit the reset force or the reset torque by converting the pneumatic confirmation pressure into the reset force and/or by generating the reset force or the reset torque in an electric and/or electromagnetic way.

Additionally or alternatively, the reset element is provided on the at least one actuator. If the reset element is provided on an actuator, the reset element is preferably configured as a rod which is configured to get into contact with at least another actuator to transmit the reset force or the reset torque to this actuator.

The at least one actuator is preferably configured as a slider. This actuator, especially the slider, is preferably configured to control at least one pneumatic pressure in at least one position on the total distance.

In an advantageous embodiment, the actuator is configured to control two pneumatic pressures, wherein in a first position on the total distance a first pressure is supplied to a first output port and in a second position on the total distance a second pressure or the first pressure is supplied to a second output port.

In another advantageous embodiment, the actuator is configured to control one pneumatic pressure, wherein in one position on the total distance a pressure is supplied to the output port. Preferably, the actuator is further configured to exhaust the output port in another position on the total distance.

The pneumatic control unit is preferably comprising at least one sealing element, which is configured to interact with the at least one actuator to connect or disconnect the ports of the pneumatic control unit. The at least one sealing element is preferably configured as an O-ring. The at least one sealing element is further preferably provided on the actuator or in the housing.

Further, the total distance preferably comprises a shape of a straight line or of at least a part of a circle line.

The reset element is preferably configured as a slider.

Additionally or alternatively, the reset element is configured to be movable along at least one part of the total distance. Further preferably, the reset element is configured to be moved in parallel to the at least one actuator.

Preferably, the at least one actuator and/or the reset element are/is comprising an axle which is oriented in parallel to at least a part of the total distance.

The reset element is preferably not provided coaxially to the at least one actuator. Preferably, the reset element is provided in the middle of two actuators. Preferably, the reset element is provided in a middle of a configuration of at least two actuators. Preferably, the reset element, especially the axle of the reset element, comprises an equal distance from at least two actuators, especially from the axles of these actuators.

The at least one release condition is preferably met if a force or torque acting on the at least one actuator especially along the total distance exceeds a predetermined release value.

Preferably, the pneumatic control unit, especially the locking mechanism, is configured to apply an inhibit force or an inhibit torque on the at least one actuator while the at least one actuator is moved along the total distance. The inhibit force or the inhibit torque is preferably causing a resistance which has to be overcome by an operator while manually moving the at least one actuator. The resistance is preferably configured to ensure that the operator will move the at least one actuator into the at least one locking position.

The resistance, especially the inhibit force or the inhibit torque, is preferably generated by a magnetic mechanism. The magnetic mechanism is preferably comprising the locking element or the locking counterpart of the locking mechanism which is configured to interact with an element of the magnetic mechanism while the at least one actuator is moved along at least a part of the total distance.

The pneumatic control unit, especially the locking mechanism, is comprising a guidance extending along the total distance, and a counterpart guided by the guidance. The counterpart and the guidance are configured to be relatively movable against each other when the at least one actuator is moved along the total distance and the guidance is configured to apply an inhibit force or inhibit torque on the at least one actuator and/or to lock the counterpart in the at least one locking position on the total distance.

The guidance is comprising a tapered portion with a smaller aperture than the maximal extension of the counterpart guided in the guidance, and the tapered portion and/or the counterpart are/is configured to deform elastically, when the tapered portion and the counterpart are in contact by a force or torque which exceeds the predetermined release value.

The guidance is preferably located on the at least one actuator or in the housing, or the counterpart is preferably located on the at least one actuator or in the housing.

Preferably, the at least one actuator is configured to be moved against an elastic counterforce or countertorque while the at least one actuator is moved along at least one part of the total distance.

The elastic counterforce or countertorque is preferably generated by a spring.

Preferably, the elastic counterforce or countertorque is configured to act on the actuator in such way that the actuator is moved away from the at least one locking position.

Preferably, the reset element is provided with a resilient bias which is configured to generate the reset force or the reset torque if the reset condition is met, wherein preferably the resilient bias is configured to be released when the reset condition is met.

Preferably, a pin can be provided which is configured to lock the reset element in a locked position. Further preferably, if the reset condition is met, the pin is configured to release the locking of the reset element while it is moved by the spring element. For example, the pin is configured to be moved by a force which is generated by the pneumatic confirmation pressure.

The reset force or the reset torque generated by the spring element is preferably configured to meet the release condition of the locking mechanism of the at least one actuator to unlock the at least one actuator and to reset the at least one actuator preferably to an end position.

Preferably, the pneumatic pressure controlled by the at least one actuator is a pneumatic control pressure configured to control a pneumatic device.

According to the invention a component for a pneumatic system is provided comprising a pneumatic control unit according to the invention.

The component is preferably configured as a park and/or shunt valve, a raising/lowering valve, or another pneumatic valve.

Additionally or alternatively, the pneumatic control unit is configured to control a pneumatic control pressure to control a park and shunt valve, a raising/lowering valve, or another pneumatic valve.

Additionally or alternatively, the system is configured as an air suspension system which is preferably configured for a trailer.

In a special embodiment of the invention, the pneumatic control unit is configured to control raising and/or lowering of a vehicle body especially of a vehicle body of a trailer. The at least one actuator is further preferably configured to be locked by the locking mechanism in a position along the total distance wherein a pneumatic pressure is supplied from the pneumatic control unit which causes raising or lowering of the vehicle body.

According to the invention, a trailer air suspension system is provided comprising a pneumatic control unit according to the invention, or a component according to the invention, wherein the trailer air suspension system is preferably configured to raise and lower a vehicle body especially of a trailer in response to the pneumatic pressure controlled by the pneumatic control unit. The trailer air suspension system is preferably comprising air bellows, wherein the air suspension system is configured to control the amount of air within the air bellows raise or lower the trailer. The amount of air is preferably controlled in reaction to the pneumatic control pressure controlled by the pneumatic control unit.

The embodiments and features described above can be combined with one another in any desired manner, wherein all embodiments that can be formed thereby are representing embodiments according to the invention.

Hereinafter, preferred embodiments of the invention are described by means of the attached drawings.

In detail,
- Fig. 1: shows a sectional view of a part of a pneumatic control unit according to the present invention in a released end position, wherein the pneumatic control unit comprises a locking mechanism with a counterpart and a tapered portion,
- Fig. 2: shows a sectional view of a part of the pneumatic control unit according to Fig. 1 in a position wherein the counterpart and the tapered portion are in contact,
- Fig. 3: shows a sectional view of the pneumatic control unit according to Fig. 1 and 2, wherein the locking mechanism is in a locked end position,
- Fig. 4: shows a sectional view of a pneumatic control unit according to the present invention wherein two actuators are in a locking position,
- Fig. 5: shows a sectional view of the pneumatic control unit according to Fig. 4 wherein the two actuators are in a released position, and
- Fig. 6: shows a sectional view of a pneumatic control unit according to the present invention comprising a magnetic locking mechanism.

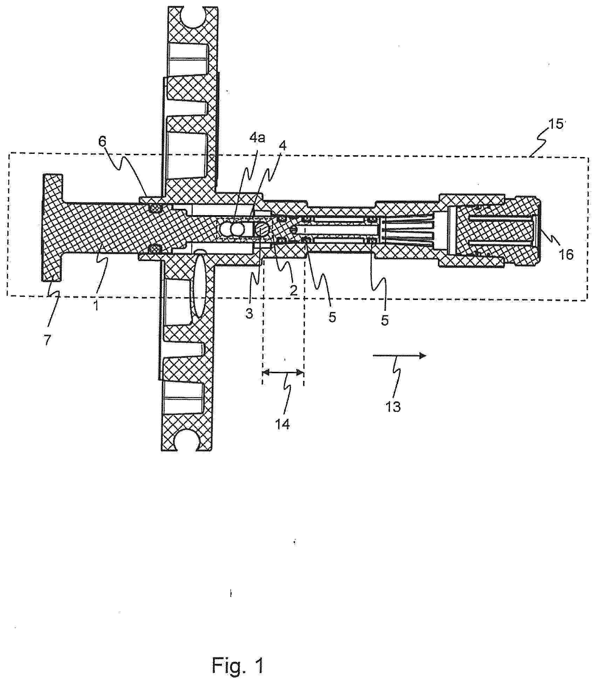

Fig. 1 shows a sectional view of a part of a pneumatic control unit 15 according to the present invention in a released end position.

An actuator 1 is shown which is configured as a slider and provided slideable in a housing 6. The actuator 1 can be manually moved parallel to the shown direction 13 along a total distance 14 by a button 7 wherefore an operator can apply a force parallel to the direction 13 on the actuator 1.

The actuator 1 further comprises sealing elements 5 which are in contact to the housing 6 and configured to control a pneumatic pressure according to the position of the actuator 1 on the total distance 14. The actuator 1 is further configured to control a supply of a pneumatic pressure to an output port 16 which is configured to be connected to other pneumatic devices (not shown).

The actuator 1 comprises a locking mechanism 2 which is marked up by a dotted frame. The locking mechanism 2 is configured to lock the actuator 1 in an end position. The locking mechanism 2 comprises a guidance 4 configured as a long hole extending along the total distance 14. The guidance 4 is located on the actuator 1. Further, the locking mechanism 2 comprises a counterpart 3 which is located in the housing 6 and which is configured as a pin which is guided in the guidance 4. The guidance 4 and the counterpart 3 are configured to be relatively movable to each other. Thereby, the extension dimension of the guidance parallel to the direction 13 defines the total distance 14 because if the counterpart 3 is in contact with the left or right end of the guidance 4, the actuator 1 can only be moved back so that the counterpart 3 and the end of the guidance 4 separate from each other again.

The guidance 4 is further provided with a tapered portion 4a. The tapered portion 4a comprises an aperture transverse to the direction 13 which is smaller than the maximum diameter of the counterpart 3. Further the tapered portion 4a is configured to deform elastically to increase the size of its aperture so that the counterpart 3 can be moved through the aperture.

The tapered portion 4a and the counterpart 3 have to be in contact under a force acting in parallel to the direction 13. The value of the force which is needed to deform the tapered portion 4a defines a release condition. If the release condition is met the locking of the locking mechanism 2 is released and the actuator can be moved parallel to the direction 13.

The working of the locking mechanism is described below. Therefore, reference is made in addition to Fig. 1 to Fig. 2 and Fig. 3.

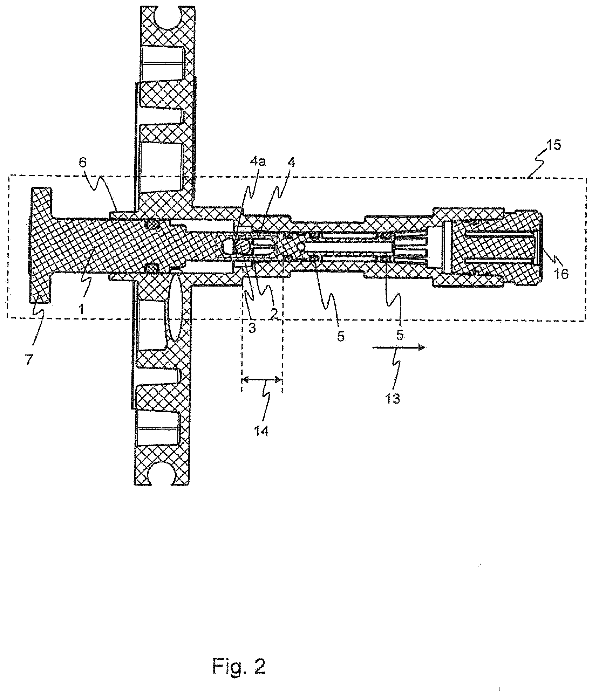

**Fig.** 2 shows a sectional view of a part of the pneumatic control unit 15 according to Fig. 1 in a position wherein the counterpart 3 and the tapered portion 4a are in contact.

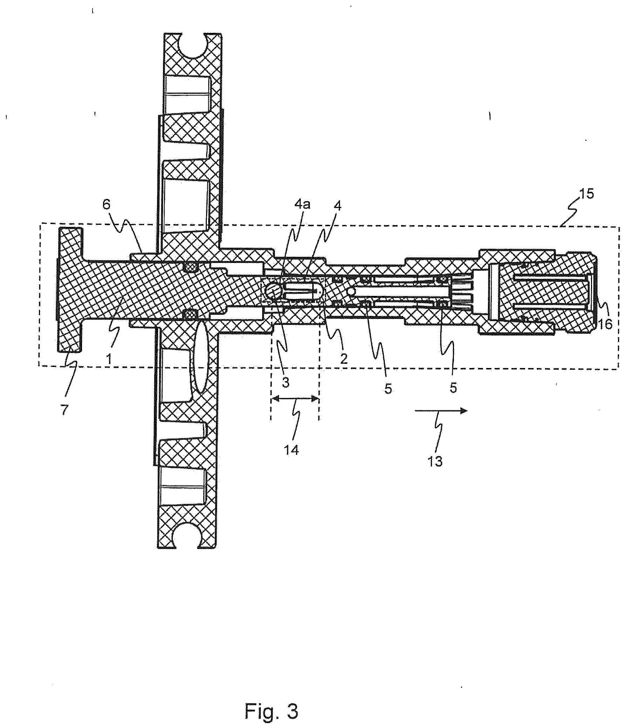

Fig. 3 shows a sectional view of a part of the pneumatic control unit 15 according to Fig. 1 and 2 in a locked end position.

If the actuator 1 is moved by an operator along the direction 13, whereby the counterpart 3 and the tapered portion 4a get into contact, as shown in Fig. 2, the operator has to apply a force by pressing the button 7 into the direction 13. The force applied on the button 7 has to be higher than a predetermined release value. Since, the tapered portion 4a configured to be deformable elastically, as described above, the predetermined release value is essentially defined by the stiffness of the guidance, especially of the tapered portion 4a. Further, it is defined by the geometry of the tapered portion 4a and of the counterpart 3.

The counterpart 3 acting on the tapered portion 4a by the force of the operator causes the tapered portion 4a to increase the size of its aperture so that the counterpart 3 can be relatively moved with respect to the guidance 4.

Finally, the counterpart 3 has reached a left end position on the total distance 14 within the guidance, as shown in Fig. 3.

The counterpart 3 is now located on a left side of the tapered portion 4a in an end position and abutting against the end of the guidance 4. Therefore, the counterpart 3 cannot move to the left with respect to the guidance 4 and if no force comprising a value higher than the predetermined release value is acting on the actuator 1 contrary to the direction 13, the counterpart 3 can also not move to the right with respect to the guidance 4.

Therefore, the locking mechanism 2 is in a locked state and the actuator 1 is in a locking position.

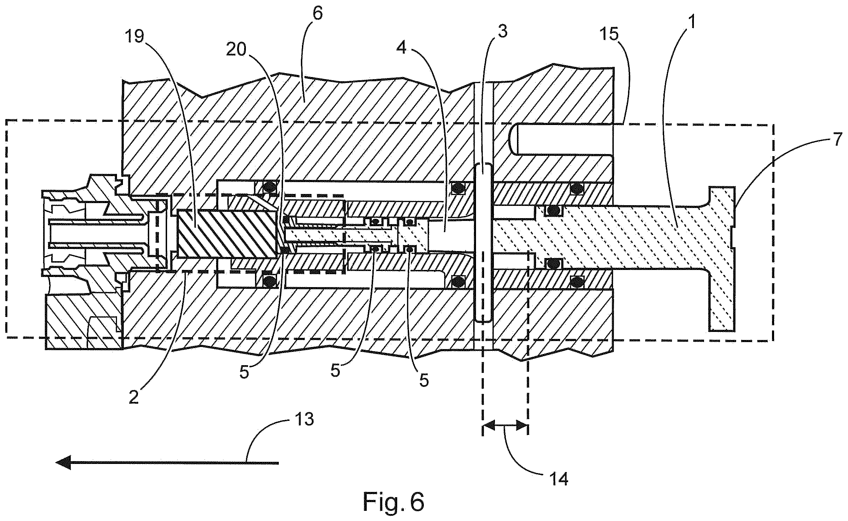

In an alternative embodiment, the mechanism 2 shown in Fig. 1 to 3 is not configured as a locking mechanism 2. Instead, the guidance 4 and the counterpart 3 are configured in such way that only an inhibit force is applied to the actuator 1. An operator will realise the force generated between the tapered portion 4a and the counterpart 3 but the force is only configured to give a haptic feedback and to inform the operator that the locking position is nearly reached. The locking itself can here e.g. be realized by a locking mechanism 2 shown in Fig. 6.

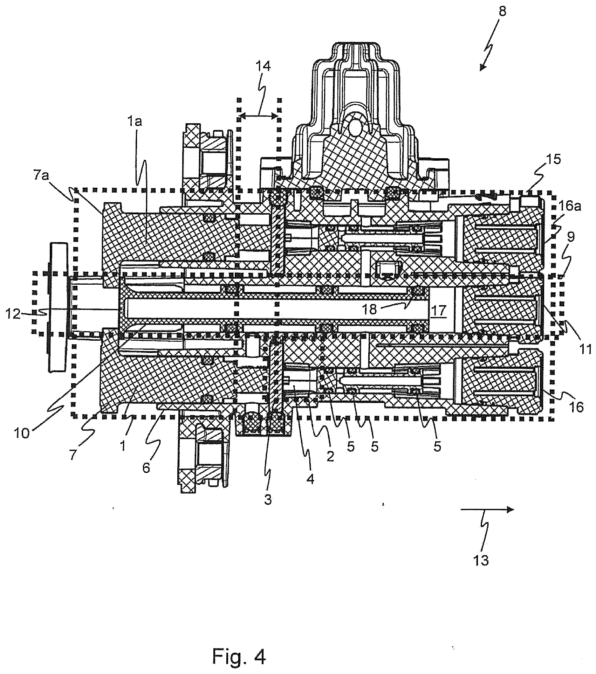

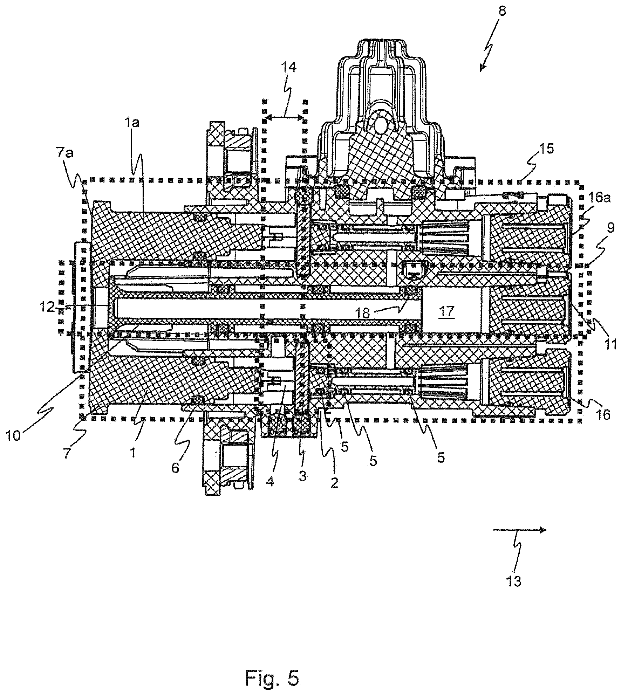

Next, a pneumatic control unit according to the present invention will be described with respect to Fig. 4 and Fig. 5.

**Fig. 4** shows a sectional view of a pneumatic control unit 15 according to the present invention wherein two actuators 1, 1a are in a locking position and **Fig. 5** shows a sectional view of the pneumatic control unit 15 according to Fig. 4 wherein the actuators 1, 1a are in a released position.

The pneumatic control unit 15 is marked up by a dotted frame and provided in a housing 6 of a park and shunt valve 8 for a pneumatic brake control system of a trailer.

Further, the control unit 15 comprises two actuators 1, 1a which correspond to the actuator 1 shown in the Figures 1 to 3 but which are shown rotated about 90° around the direction 13. For a detailed description of these actuators 1, 1a, reference is therefore made to Figures 1 to 3.

Both actuators 1, 1a are configured to be manually operated by an operator applying a force to the buttons 7, 7a and are each comprising an output port 16, 16a configured to be connected to a pneumatic device, e.g. to a raising and lowering valve (not shown) of the trailer. By the output ports 16, 16a a pneumatic control pressure can be supplied to the raising and lowering valve, to trigger raising or lowering of a vehicle body of the trailer. For example, the lower actuator 1 is configured to supply the pneumatic control pressure which is configured to trigger the lowering and the upper actuator, the second actuator 1a, is configured to supply the pneumatic control pressure which is configured to trigger the raising of the vehicle body of the trailer.

Both actuators 1, 1a are configured to be moved parallel to the direction 13 over a total distance 14 which is defined according to the total distance 14 as shown in Fig. 1 to Fig. 3.

The pneumatic control unit 15 further comprises a reset mechanism 9 which is marked up by a dotted frame in the drawings. The reset mechanism 9 is comprising a reset element 10 configured as a slider which is provided movable parallel to the direction 13. The reset element 10 further comprises a contact portion 12 provided on a left end of the reset element 10. The reset portion 12 is configured to abut to the button 7 and to the button 7a, if the reset element 10 is moved against the direction 13.

Further, the reset element 10 is configured to be moved in reaction to a pneumatic pressure which can be supplied to a reset port 11 of the reset mechanism 9. If the reset element 10 is not in the left end position and a pneumatic pressure is supplied to the reset port 11, the reset element 10 is configured to move to the left, especially to the left end position. Therefore, the reset port 11 is connected to a chamber 17 located on a right end of the reset element 10, wherein the reset element 10 is configured to seal the chamber 17 by its right end and by a sealing element 18 located on the reset element 10 and which is in contact to the housing 6. The pneumatic pressure supplied to the chamber 17, therefore generates a force acting on the right end of the reset element 10. The pneumatic pressure supplied to the reset port 11 therefore acts as a pneumatic conformation pressure.

Since the actuators 1, 1a are configured to be locked in their locking position by the locking mechanism 2, the reset element 10 is configured to release the locking and to move the actuators 1, 1a from the locking position to an end position. Therefore, the reset element 10 is configured to generate a force which corresponds at least to the predetermined release value. This force is applied to the actuator 1, to the second actuator 1a or to both actuators 1, 1a when the reset element 10 is moved to the left and the contact portion 12 abuts to a right side of the button 7, of the button 7a or of both buttons 7, 7a.

The reset function of the pneumatic control unit 15 works as follows. For simplification, the reset function is only described with reference to the lower actuator 7. The upper actuator 7a is reset in the same way.

If an operator has pressed the button 7 and has moved the actuator 1 into the locking position as shown in Fig. 4, the right side of the button 7 abuts to the contact portion 12 of the reset element 10 and a pneumatic pressure is supplied via the port 16 to other devices of the system.

If the actuator 1 shall be reset, a pneumatic pressure has to be supplied to the reset port 11 wherein a force is generated in the chamber 17 acting on the right end of the reset element 10. If this force exceeds the predetermined release value, the reset element 10 abutting to the right side of the button 7 by the contact portion 12, moves to the left and therefore moves the actuator 1 out of the locking position.

Therefore, the reset element 10 is configured to reset the actuator 1 to a left end position as shown on Fig. 5.

In this case, the release condition defined by the predetermined release value of this force and the reset condition are identical.

**Fig.** 6 shows a sectional view of a pneumatic control unit 15 according to the present invention comprising a magnetic locking mechanism.

The pneumatic control unit 15 is marked up by a dotted frame and is comprising an actuator 1 configured as a slider which can be manually moved along the total distance 14 in parallel to the horizontal direction 13 which is heading to the left in the drawing. The actuator 1 is provided in a housing 6 and is shown in its locking position wherein the actuator 1 is moved to the left. The actuator 1 is essentially configured like the actuator 1 shown in the Figures above.

The right end of the actuator 1 is configured for manual operation and therefore comprising a button 7 on its right end. Further, the pneumatic control unit 15 is comprising a counterpart 3 and a guidance 4 as described in the Figures 1 to 3. Finally the actuator is comprising a sealing element 5 as described in the Figures 1 to 3.

The actuator 1 comprises a locking mechanism 2 comprising a locking counterpart 20 provided on a left end of the actuator 1 in the drawing which abuts at a locking element 19 of the locking mechanism 2 in the shown position of the actuator 1. The locking mechanism 2 is marked up by a dotted frame. The locking element 19 is provided in the housing 6 and is comprising a magnet. The locking counterpart 20 comprises a magnetic material. Therefore, between the locking element 19 and the locking counterpart 20 a magnetic attraction force can be generated, if both elements 19, 20 approach to each other. The magnetic attraction force is further configured to move the actuator 1 into its locking position from a distance of 10% or less of the total distance, especially preferred 20% or less of the total distance, in particular 30% or less of the total distance.

Due to the magnetic attraction force between the locking element 19 and the locking counterpart 20, the actuator 1 is locked in the shown position on the total distance 14. The magnetic attraction force between the locking element 19 and the locking counterpart 20 is defining a release condition. If a force is acting on the actuator 1 against the direction 13 and if this force has a higher value than the value of the magnetic attraction force, the actuator 1 can be released from the locking position and moved to the right.

The release of the actuator 1 and further the reset of the actuator 1 to a predetermined position along the total distance 14 can be carried out by a reset mechanism as described in Fig. 4 and Fig. 5.

The invention is not limited to the embodiments described above. Each of the features of the embodiments shown in Fig. 1 to 6 can be combined with each other.

Furthermore, the actuator 1 can comprise a spring element configured to act against a movement of the actuator 1 in the direction 13. This causes a reset of the actuator 1 if it is not in the locking position at the right end of the total distance 14. This ensures that the actuator 1 is not accidentally placed in an intermediate position. The spring element is configured to generate a force while the actuator 1 is in the locking position which does not exceed the predetermined release value. Therefore, the actuator 1 can be locked despite of the spring element.

Furthermore, the actuation of the reset element 10 can be configured in a different way. For example the reset mechanism 9 comprises a spring element configured to act against the direction 13 on the reset element 10. Further, the reset mechanism 9 is comprising a locking mechanism configured to lock the reset element 10 when it is moved to a right end position as shown in Fig. 4, for example by the button 7 on which a force of an operator is applied. The locking mechanism of the reset mechanism 9 is further configured to release the locking of the reset element 10, if a pneumatic pressure, especially a pneumatic confirmation pressure, is supplied to the reset port 11. After releasing the reset element 10, it is moved to the left by the force of the spring element and since the right side of the button 7 abuts to the contact portion 12, the actuator 1 is also moved to the left into the left end position on the total distance 14. The spring element has further to be configured to generate a force which is at least the predetermined release value. This embodiment has the advantage that only a small pneumatic pressure is needed to release the reset element 10.

In the embodiments shown in the Figures, each actuator 1, 1a is only configured to control one pneumatic pressure via one port 16, 16a. Furthermore, such a pneumatic control unit 15 can also comprise actuators which are configured to control at least two control pressures depending on the position of the actuator on the total distance 14.

The total distance can further be configured as a circle or as a part of a circle, wherein the actuator is than operated by rotation. Therefore, the actuator can further comprise a lever configured for manual rotation of the actuator.

Further, the counterpart 3 can be configured to deform elastically, wherein the tapered portion 4a is configured to be stiff. Furthermore, the counterpart 3 as well as the tapered portion 4a can be configured to deform elastically.

Furthermore, the locking element 19 shown in Fig. 6 can also be provided on the actuator 1 wherein the locking counterpart 20 is provided in the housing.

Further, the locking element 19 or the locking counterpart 20 do not necessarily have to be provided at the end of the actuator 1. Furthermore, every suitable position on the actuator 1 can be chosen. The other element 19, 20 which is provided in the housing 6 or at least fixed with respect to the actuator 1, must be provided in such way that the magnetic attraction force between the elements 19, 20 can be increased to its maximum in the locking position.

### LIST OF REFERENCE SIGNS

- 1: actuator
- 1a: second actuator
- 2: locking mechanism
- 3: counterpart
- 4: guidance
- 4a: tapered portion
- 5: sealing element
- 6: housing
- 7: button
- 7a: button
- 8: park and shunt valve
- 9: reset mechanism
- 10: reset element
- 11: reset port
- 12: contact portion
- 13: direction
- 14: total distance
- 15: pneumatic control unit
- 16: output port
- 17: chamber
- 18: sealing element
- 19: locking element
- 20: locking counterpart

## Claims

1. Pneumatic control unit (15) for controlling a pneumatic pressure comprising:
- a housing (6),
- at least one actuator (1, 1a) configured to be manually moved along a total distance (14) within the housing (6) and configured to control a pneumatic pressure depending on its position on the total distance (14), and
- a locking mechanism (2) configured to lock the at least one actuator (1, 1a) in at least one locking position along the total distance (14), wherein
the locking mechanism (2) is configured to release the locking of the at least one actuator (1, 1a) if at least one release condition is met, wherein
the at least one release condition is met if a force or torque acting on the at least one actuator (1, 1a) especially along the total distance (14) exceeds a predetermined release value, wherein
the locking mechanism (2) is configured to lock the at least one actuator (1, 1a) by applying a magnetic locking force, wherein the magnetic locking force is applied on the at least one actuator (1, 1a), wherein
the pneumatic control unit (15) further comprising:
- a guidance (4) extending along the total distance (14) and
- a counterpart (3) guided by guidance (4), wherein
the counterpart (3) and the guidance (4) are configured to be relatively movable against each other when the at least one actuator (1, 1a) is moved along the total distance (14), and
the guidance (4) is configured to apply an inhibit force or inhibit torque on the at least one actuator (1, 1a) and/or to lock the counterpart (3) in the at least one locking position on the total distance (14), wherein
the guidance (4) comprising a tapered portion (4a) with a smaller aperture than the maximal extension of the counterpart (3) guided in the guidance (4), and
the tapered portion (4a) and/or the counterpart (3) are/is configured to deform elastically, when the tapered portion (4a) and the counterpart (3) are in contact by a force or torque which exceeds the predetermined release value.

2. Pneumatic control unit (15) according to claim 1, wherein
the locking mechanism (2) comprising a locking element (19) and a locking counterpart (20) which are configured to generate the magnetic locking force, if the actuator (1, 1a) is moved into the at least one locking position.

3. Pneumatic control unit (15) according to claim 2, wherein
the locking element (19) and/or the locking counterpart (20) comprising a magnet and/or a magnetic material, and/or wherein
the locking element (19) and/or the locking counterpart (20) are/is provided on the at least one actuator (1, 1a) and/or in the housing (6).

4. Pneumatic control unit (15), according to any of the foregoing claims, comprising:
- a reset mechanism (9) configured to reset the at least one actuator (1, 1a) into a position along the total distance (14) if at least one predetermined reset condition is met, wherein preferably the predetermined reset condition is the appearance of a pneumatic confirmation pressure and/or of an electric or electronic confirmation signal and/or a mechanical confirmation signal.

5. Pneumatic control unit (15), according to claim 4, wherein
the reset mechanism (9) comprising a reset element (10) configured to transmit a reset force or a reset torque to the at least one actuator (1, 1a), wherein
the reset force or the reset torque is preferably configured to move the at least one actuator (1, 1a) into an end position along the total distance (14).

6. Pneumatic control unit (15) according to claim 5, wherein
the reset element (10) is configured to transmit the reset force or the reset torque by converting the pneumatic confirmation pressure into the reset force and/or by generating the reset force or the reset torque in an electric and/or electromagnetic way, and/or
the reset element (10) is provided on the at least one actuator (1, 1a).

7. Pneumatic control unit (15) according to any of the foregoing claims, wherein
the at least one actuator (1, 1a) is configured as a slider, and/or
the total distance (14) comprises a shape of a straight line or of at least a part of a circle line.

8. Pneumatic control unit (15) according to any of claims 5 to 7, wherein
the reset element (10) is configured as a slider, and/or
the reset element (10) is configured to be movable along at least one part of the total distance (14).

9. Pneumatic control unit (15),according to any of the foregoing claims, wherein
the guidance (4) is located on the at least one actuator (1, 1a) or in the housing (6), or
the counterpart (3) is located on the at least one actuator (1, 1a) or in the housing (6).

10. Pneumatic control unit (15) according to any of the foregoing claims, wherein
the at least one actuator (1, 1a) is configured to be moved against an elastic counterforce or countertorque while the at least one actuator (1, 1a) is moved along at least one part of the total distance (14), wherein
the elastic counterforce or countertorque is preferably generated by a spring.

11. Pneumatic control unit (15) according to claim 5 to 10, wherein
the reset element (10) is provided with a resilient bias which is configured to generate the reset force or the reset torque if the reset condition is met, wherein
the resilient bias is preferably configured to be released when the reset condition is met.

12. Pneumatic control unit (15) according to any of the foregoing claims, wherein
the pneumatic pressure controlled by the at least one actuator (1, 1a) is a pneumatic control pressure configured to control a pneumatic device.

13. Component for a pneumatic system, comprising:
- a pneumatic control unit (15) according to one of the claims 1 to 12, wherein
the component is configured as a park and/or shunt valve, a raising/lowering valve, or another pneumatic valve, and/or
the pneumatic control unit (15) is configured to control a pneumatic control pressure to control a park and shunt valve (8), a raising/lowering valve, or another pneumatic valve, and/or
the system is configured as an air suspension system which is preferably configured for a trailer.

14. Trailer air suspension system comprising:
- a pneumatic control unit (15) according to one of the claims 1 to 12, or
- a component according to claim 13, wherein
the trailer air suspension system is preferably configured to raise and lower a vehicle body especially of a trailer in response to the pneumatic pressure controlled by the pneumatic control unit (15).

## Patentansprüche

1. Pneumatische Steuereinheit (15) zum Steuern eines pneumatischen Drucks, die Folgendes umfasst:
- ein Gehäuse (6),
- zumindest einen Aktuator (1, 1a), dazu ausgelegt, manuell entlang einer Gesamtstrecke (14) im Gehäuse (6) bewegt zu werden, und dazu ausgelegt, einen pneumatischen Druck in Abhängigkeit von seiner Position auf der Gesamtstrecke (14) zu steuern, und
- einen Verriegelungsmechanismus (2), dazu ausgelegt, den zumindest einen Aktuator (1, 1a) in zumindest einer Verriegelungsposition entlang der Gesamtstrecke (14) zu verriegeln, wobei
wobei der Verriegelungsmechanismus (2) dazu ausgelegt ist, die Verriegelung des zumindest einen Aktuators (1, 1a) freizugeben, wenn zumindest eine Freigabebedingung erfüllt ist, wobei
die zumindest eine Freigabebedingung erfüllt ist, wenn eine Kraft oder ein Drehmoment, das auf den zumindest einen Aktuator (1, 1a), insbesondere entlang der Gesamtstrecke (14), wirkt, einen vorbestimmten Freigabewert überschreitet, wobei
der Verriegelungsmechanismus (2) dazu ausgelegt ist, den zumindest einen Aktuator (1, 1a) durch Anwenden einer magnetischen Verriegelungskraft zu verriegeln, wobei die magnetische Verriegelungskraft auf den zumindest einen Aktuator (1, 1a) angewendet wird, wobei
die pneumatische Steuereinheit (15) ferner Folgendes umfasst:
- eine Führung (4), die sich entlang der Gesamtstrecke (14) erstreckt, und
- ein Gegenstück (3), geführt durch die Führung (4), wobei
das Gegenstück (3) und die Führung (4) dazu ausgelegt sind, relativ gegeneinander bewegbar zu sein, wenn der zumindest eine Aktuator (1, 1a) entlang der Gesamtstrecke (14) bewegt wird, und
die Führung (4) dazu ausgelegt ist, eine Sperrkraft oder ein Sperrdrehmoment auf den zumindest einen Aktuator (1, 1a) anzuwenden und/oder das Gegenstück (3) in der zumindest einen Verriegelungsposition auf der Gesamtstrecke (14) zu verriegeln, wobei
die Führung (4) einen sich verjüngenden Teil (4a) mit einer kleineren Öffnung als die maximale Ausdehnung des in der Führung (4) geführten Gegenstücks (3) umfasst, und der sich verjüngende Teil (4a) und/oder das Gegenstück (3) dazu ausgelegt sind/ist, sich elastisch zu verformen, wenn der sich verjüngende Teil (4a) und das Gegenstück (3) durch eine Kraft oder ein Drehmoment, die bzw. das den vorbestimmten Freigabewert übersteigt, in Kontakt gebracht werden.

2. Pneumatische Steuereinheit (15) nach Anspruch 1, wobei
der Verriegelungsmechanismus (2) ein Verriegelungselement (19) und ein Verriegelungsgegenstück (20) umfasst, die dazu ausgelegt sind, die magnetische Verriegelungskraft zu erzeugen, wenn der Aktuator (1, 1a) in die zumindest eine Verriegelungsposition bewegt wird.

3. Pneumatische Steuereinheit (15) nach Anspruch 2, wobei
das Verriegelungselement (19) und/oder das Verriegelungsgegenstück (20) einen Magneten und/oder ein magnetisches Material umfassen, und/oder wobei das Verriegelungselement (19) und/oder das Verriegelungsgegenstück (20) an dem zumindest einen Aktuator (1, 1a) und/oder im Gehäuse (6) bereitgestellt sind/ist.

4. Pneumatische Steuereinheit (15) nach einem der vorhergehenden Ansprüche, die Folgendes umfasst:
- einen Rücksetzmechanismus (9), dazu ausgelegt, den zumindest einen Aktuator (1, 1a) in eine Position entlang der Gesamtstrecke (14) zurückzusetzen, wenn zumindest eine vorbestimmte Rücksetzbedingung erfüllt ist, wobei vorzugsweise die vorbestimmte Rücksetzbedingung das Auftreten eines pneumatischen Bestätigungsdrucks und/oder eines elektrischen oder elektronischen Bestätigungssignals und/oder eines mechanischen Bestätigungssignals ist.

5. Pneumatische Steuereinheit (15) nach Anspruch 4, wobei
der Rücksetzmechanismus (9) ein Rücksetzelement (10) umfasst, das dazu ausgelegt ist, eine Rücksetzkraft oder ein Rücksetzdrehmoment auf den zumindest einen Aktuator (1, 1a) zu übertragen, wobei
die Rücksetzkraft oder das Rücksetzdrehmoment vorzugsweise dazu ausgelegt ist, den zumindest einen Aktuator (1, 1a) in eine Endposition entlang der Gesamtstrecke (14) zu bewegen.

6. Pneumatische Steuereinheit (15) nach Anspruch 5, wobei
das Rücksetzelement (10) dazu ausgelegt ist, die Rücksetzkraft oder das Rücksetzdrehmoment zu übertragen durch Umwandeln des pneumatischen Bestätigungsdrucks in die Rücksetzkraft und/oder durch Erzeugen der Rücksetzkraft oder des Rücksetzdrehmoments in einer elektrischen und/oder elektromagnetischen Weise, und/oder
das Rücksetzelement (10) an dem zumindest einen Aktuator (1, 1a) bereitgestellt ist.

7. Pneumatische Steuereinheit (15) nach einem der vorhergehenden Ansprüche, wobei
der zumindest eine Aktuator (1, 1a) als ein Gleitstück ausgelegt ist, und/oder
die Gesamtstrecke (14) eine Form einer geraden Linie oder zumindest eines Teils einer Kreislinie umfasst.

8. Pneumatische Steuereinheit (15) nach einem der Ansprüche 5 bis 7, wobei
das Rücksetzelement (10) als ein Gleitstück ausgelegt ist, und/oder
das Rücksetzelement (10) dazu ausgelegt ist, entlang zumindest eines Teils der Gesamtstrecke (14) bewegbar zu sein.

9. Pneumatische Steuereinheit (15) nach einem der vorhergehenden Ansprüche, wobei
die Führung (4) an dem zumindest einen Aktuator (1, 1a) oder im Gehäuse (6) befindlich ist, oder
das Gegenstück (3) an dem zumindest einen Aktuator (1, 1a) oder im Gehäuse (6) befindlich ist.

10. Pneumatische Steuereinheit (15) nach einem der vorhergehenden Ansprüche, wobei
der zumindest eine Aktuator (1, 1a) dazu ausgelegt ist, gegen eine elastische Gegenkraft oder ein Gegendrehmoment bewegt zu werden, während der zumindest eine Aktuator (1, 1a) entlang zumindest eines Teils der Gesamtstrecke (14) bewegt wird, wobei
die elastische Gegenkraft oder das Gegendrehmoment vorzugsweise durch eine Feder erzeugt wird.

11. Pneumatische Steuereinheit (15) nach Anspruch 5 bis 10, wobei
das Rücksetzelement (10) mit einer elastischen Vorspannung versehen ist, die dazu ausgelegt ist, die Rücksetzkraft oder das Rücksetzdrehmoment zu erzeugen, wenn die Rücksetzbedingung erfüllt ist, wobei die elastische Vorspannung vorzugsweise dazu ausgelegt ist, freigegeben zu werden, wenn die Rücksetzbedingung erfüllt ist.

12. Pneumatische Steuereinheit (15) nach einem der vorhergehenden Ansprüche, wobei
der durch den zumindest einen Aktuator (1, 1a) gesteuerte pneumatische Druck ein pneumatischer Steuerdruck ist, der dazu ausgelegt ist, eine pneumatische Vorrichtung zu steuern.

13. Komponente für ein pneumatisches System, die Folgendes umfasst:
- eine pneumatische Steuereinheit (15) nach einem der Ansprüche 1 bis 12, wobei
die Komponente als ein Park- und/oder Shunt-Ventil, ein Anhebe-/Absenkventil oder ein anderes pneumatisches Ventil ausgelegt ist, und/oder
die pneumatische Steuereinheit (15) dazu ausgelegt ist, einen pneumatischen Steuerdruck zu steuern, um ein Park- und Shunt-Ventil (8), ein Anhebe-/Absenkventil oder ein anderes pneumatisches Ventil zu steuern, und/oder das System als ein Luftfederungssystem ausgelegt ist, das vorzugsweise für einen Anhänger ausgelegt ist.

14. Anhängerluftfederungssystem, das Folgendes umfasst:
- eine pneumatische Steuereinheit (15) nach einem der Ansprüche 1 bis 12, oder
- eine Komponente nach Anspruch 13, wobei das Anhängerluftfederungssystem vorzugsweise dazu ausgelegt ist, eine Fahrzeugkarosserie, insbesondere eines Anhängers, in Reaktion auf den durch die pneumatische Steuereinheit (15) gesteuerten pneumatischen Druck anzuheben und abzusenken.

## Revendications

1. Unité (15) pneumatique de commande pour commander une pression pneumatique, comprenant :
- un boîtier (6),
- au moins un actionneur (1, 1a) configuré pour être déplacé manuellement sur une distance (14) totale dans le boîtier (6) et configuré pour régler une pression pneumatique en fonction de sa position sur la distance (14) totale, et
- un mécanisme (2) de verrouillage configuré pour verrouiller le au moins un actionneur (1, 1a) dans au moins une position de verrouillage sur la distance (14) totale, dans laquelle
le mécanisme (2) de verrouillage est configuré pour déverrouiller le verrouillage du au moins un actionneur (1, 1a), si au moins une condition de déverrouillage est satisfaite, dans laquelle
la au moins une condition de déverrouillage est satisfaite, si une force ou un couple s'appliquant au au moins un actionneur (1, 1a), en particulier sur la distance (14) totale, dépasse une valeur de dérouillage déterminée à l'avance, dans laquelle
le mécanisme (2) de verrouillage est configuré pour verrouiller le au moins un actionneur (1, 1a) en appliquant une force magnétique de verrouillage, la force magnétique de verrouillage étant appliquée au au moins un actionneur (1, 1a), dans laquelle
l'unité (15) pneumatique de commande comprend en outre :
- un guidage (4) s'étendant sur la distance (14) totale et
- une partie (3) antagoniste guidée par le guidage (4), dans laquelle la partie (3) antagoniste et le guidage (4) sont configurés pour être mobiles relativement l'un par rapport à l'autre, lorsque le au moins un actionneur (1, 1a) est déplacé sur la distance (14) totale, et
le guidage (4) est configuré pour appliquer une force d'inhibition ou un couple d'inhibition au au moins un actionneur (1, 1a) et/ou pour verrouiller la partie (3) antagoniste dans la au moins une position de verrouillage sur la distance (14) totale, dans laquelle
le guidage (4) comprend une partie (4a) conique ayant une ouverture plus petite que l'étendue maximum de la partie (3) antagoniste guidée dans le guidage (4), et
la partie (4a) conique et/ou la partie (3) antagoniste sont/est configurée(s) pour se déformer élastiquement, lorsque la partie (4a) conique et/ou la partie (3) antagoniste sont en contact par une force ou un couple, qui dépasse la valeur de déverrouillage déterminée à l'avance.

2. Unité (15) pneumatique de commande suivant la revendication 1, dans laquelle
le mécanisme (2) de verrouillage comprend un élément (19) de verrouillage et une partie (20) antagoniste de verrouillage, qui sont configurés pour produire la force magnétique de verrouillage si l'actionneur (1, 1a) est amené à la au moins une position de verrouillage.

3. Unité (15) pneumatique de commande suivant la revendication 2, dans laquelle
l'élément (19) de verrouillage et/ou la partie (20) antagoniste de verrouillage comprend un aimant et/ou un matériau magnétique et/ou dans laquelle
l'élément (19) de verrouillage et/ou la partie (20) antagoniste de verrouillage sont/est prévu(s) sur le au moins un actionneur (1, 1a) et/ou dans le boîtier (6).

4. Unité (15) pneumatique de commande suivant l'une quelconque des revendications précédentes, comprenant :
- un mécanisme (9) de remise à l'état initial configuré pour remettre le au moins un actionneur (1, 1a) à une position sur la distance (14) totale, si au moins une condition déterminée à l'avance de remise à l'état initial est satisfaite, dans laquelle la condition déterminée à l'avance de remise à l'état initial est de préférence l'apparition d'une pression pneumatique de confirmation et/ou d'un signal électrique ou électronique de confirmation et/ou d'un signal mécanique de confirmation.

5. Unité (15) pneumatique de commande suivant la revendication 4, dans laquelle
le mécanisme (9) de remise à l'état initial comprend un élément (10) de remise à l'état initial, configuré pour appliquer une force de remise à l'état initial ou un couple de remise à l'état initial au au moins un actionneur (1, 1a), dans laquelle
la force de remise à l'état initial ou le couple de remise à l'état initial est configuré de préférence pour amener le au moins un actionneur (1, 1a) à une position d'extrémité sur la distance (14) totale.

6. Unité (15) pneumatique de commande suivant la revendication 5, dans laquelle
l'élément (10) de remise à l'état initial est configuré pour appliquer la force de remise à l'état initial ou le couple de remise à l'état initial, en transformant la pression pneumatique de confirmation en la force de remise à l'état initial et/ou en produisant la force de remise initiale ou le couple de remise initiale d'une façon électrique et/ou électromagnétique et/ou
l'élément (10) de remise à l'état initial est prévu sur le au moins un actionneur (1, 1a).

7. Unité (15) pneumatique de commande suivant l'une quelconque des revendications précédentes, dans laquelle
le au moins un actionneur (1, 1a) est configuré sous la forme d'un coulisseau et/ou
la distance (14) totale comprend une forme d'une ligne droite ou d'au moins une partie d'une ligne circulaire.

8. Unité (15) pneumatique de commande suivant l'une quelconque des revendications 5 à 7, dans laquelle
l'élément (10) de remise à l'état initial est configuré sous la forme d'un coulisseau et/ou
l'élément (10) de remise à l'état initial est configuré de manière à être mobile sur au moins une partie de la distance (14) totale.

9. Unité (15) pneumatique de commande suivant l'une quelconque des revendications précédentes, dans laquelle
le guidage (4) est placé sur le au moins un actionneur (1, 1a) ou dans le boîtier (6)
ou
la partie (3) antagoniste est placée sur le au moins un actionneur (1,1a) ou dans le boîtier (6).

10. Unité (15) pneumatique de commande suivant l'une quelconque des revendications précédentes, dans laquelle
le au moins un actionneur (1,1a) est configuré pour être déplacé à l'encontre d'une force antagoniste ou d'un couple antagoniste élastique, alors que le moins un actionneur (1,1a) est déplacé sur au moins une partie de la distance (14) totale, dans laquelle
la force antagoniste ou le couple antagoniste élastique est produit de préférence par un ressort.

11. Unité (15) pneumatique de commande suivant la revendication 5 à 10, dans laquelle
l'élément (10) de remise à l'état initial est pourvu d'une tension de retour élastique, qui est configurée pour produire la force de remise à l'état initial ou le couple de remise à l'état initial, si la condition de remise à l'état initial est satisfaite, dans laquelle
la tension de retour élastique est configurée de préférence pour être relâchée, lorsque la condition de remise à l'état initial est satisfaite.

12. Unité (15) pneumatique de commande suivant l'une quelconque des revendications précédentes, dans laquelle
la pression du pneumatique commandée par au moins un actionneur (1, 1a) est une pression pneumatique de commande configurée pour commander un dispositif pneumatique.

13. Composant d'un système pneumatique comprenant :
- une unité (15) pneumatique de commande suivant l'une des revendications 1 à 12, dans lequel le composant est configuré en soupape de stationnement et/ou de dérivation, soupape de soulèvement / abaissement ou autre soupape pneumatique et/ou
l'unité (15) pneumatique de commande est configurée pour commander une pression pneumatique de commande, afin de commander une soupape (8) de stationnement et de dérivation, une soupape de soulèvement / abaissement ou une autre soupape pneumatique et/ou le système est configuré en système de suspension pneumatique, configuré de préférence pour une remorque.

14. Système de suspension pneumatique de remorque comprenant :
- une unité (15) pneumatique de commande suivant l'une des revendications 1 à 12, ou
- un composant suivant la revendication 13, dans lequel
le système de suspension pneumatique de remorque est configuré de préférence pour soulever et abaisser une caisse de véhicule, en particulier d'une remorque, en réaction à la pression pneumatique commandée par l'unité (15) pneumatique de commande.
